# EUROPEAN PATENT APPLICATION

(11) **EP 4 753 026 A1**
(43) Date of publication of application: **03.06.2026**
(21) Application number: 24216313.7
(22) Date of filing: 28.11.2024
(51) Int. Cl.: H01M 10/6556, H01M 50/224, H01M 50/249, H01M 50/289, H01M 50/291, H01M 50/293, H01M 50/358

(54) **TWO-PIECE TENSION MEMBER**

(71) Applicant: Ford Global Technologies, LLC, Dearborn, MI 48126 (US)
(72) Inventor: LECK, Chris, Enfield, EN2 7EJ (GB); PINNEGAR, Marc, Hornchurch, RM12 6DT (GB); MACWILLSON, Hamish, Colchester, CO6 2PP (GB); THOMAS, Ronnie, South Woodham Ferrers, CM3 5XZ (GB); SCHOLTES, Duncan, Hampton, TW12 2TJ (GB)
(74) Representative: HG Law International LLP

(57) **Abstract**

The present disclosure provides a battery pack comprising two hollow side rails, a base, and first and second tension members. The first tension member includes first mounting portions and a first central portion with a first recess and first sidewall having first apertures. The second tension member includes second mounting portions and a second central portion with a second recess and second sidewall having second apertures. The first and second tension members are positioned with recesses aligned to define a central pathway (116), and are positioned between and perpendicular to the side rails (150) to accommodate at least one battery array. Each side rail (150) includes an opening on an inner side aligned with the first recess and in fluid communication with the central pathway (116).

## Description

### FIELD OF INVENTION

The present disclosure relates to battery packs for vehicles, and more particularly to a battery pack comprising a two-piece tension member, and a vehicle incorporating such a battery pack.

### BACKGROUND

Battery packs are widely used in electric and hybrid vehicles to store and provide electrical energy for powering the vehicle's drivetrain and other systems. These battery packs typically contain multiple battery cells or modules arranged in arrays and housed within an enclosure. The enclosure provides structural support, protection from the external environment, and thermal management for the battery cells.

In modern electric vehicles, there is a constant drive to improve battery pack design to enhance performance and manufacturability. Key considerations include optimizing the structural integrity of the pack, managing thermal conditions, and providing effective venting in case of cell failure events. The arrangement and interconnection of components within the battery pack play a role in addressing these considerations.

One challenge in battery pack design is creating a structure that is both lightweight and structurally robust to withstand vehicle crash scenarios and protect the battery cells. Another challenge is effectively managing heat generated by the battery cells during operation, which can impact performance and lifespan. Additionally, in the event of a cell failure, venting gases and preventing thermal runaway from propagating to adjacent cells can enhance pack performance.

### SUMMARY OF INVENTION

This Summary is provided to introduce a selection of concepts in a simplified form that are further described below in the Detailed Description.

In a first aspect, a battery pack is provided. The battery pack comprises two side rails, a base, a first tension member, and a second tension member. The two side rails are hollow along their length. The first tension member includes first mounting portions and a first central portion between the first mounting portions, the first central portion defining a first recess on one side of the first tension member and having a first sidewall opposite the first recess which includes first apertures therealong. The second tension member includes second mounting portions and a second central portion between the second mounting portions, the second central portion defining a second recess on one side of the second tension member and having a second sidewall opposite the second recess which includes second apertures therealong. The first and second tension members are positioned such that the first and second recess are aligned and collectively define a central pathway, and are positioned between and perpendicular to the two side rails such that, in combination with the base, the side rails, first and second tension members, and base are arranged so as to accommodate at least one battery array. Each side rail includes an opening on an inner side thereof which is aligned with the first recess of the first tension member, the opening on each side rail being in fluid communication with the central pathway.

This configuration provides a robust and efficient structure for housing battery arrays while allowing for effective thermal management through the central pathway and side rail openings.

The central pathway may include a silicate sheet along its length.

The inclusion of a silicate sheet in the central pathway enhances thermal insulation and fire resistance of the battery pack.

Each of the first and second sidewalls of the first and second tension members may include, in respective first and second recesses, a silicate sheet along their length.

This additional silicate sheet placement further improves thermal management and performance of the battery pack.

The silicate sheet may be a mica sheet.

Mica sheets offer excellent thermal insulation and fire-resistant properties, contributing to the overall performance of the battery pack.

The first and second tension members may be made of aluminium.

Aluminium provides a lightweight yet strong material for the tension members, enhancing the overall efficiency of the battery pack.

The first and second tension members may be formed by extrusion.

Extrusion allows for efficient production of the tension members with consistent quality.

The first and second tension members may be formed by high pressure die casting.

High pressure die casting offers an alternative manufacturing method that can produce complex shapes with high precision.

The first and second mounting portions may be complementary, such that when the first and second tension members are positioned together, the first and second mounting portions fit together.

This complementary design ensures a secure and precise fit between the tension members, enhancing the structural integrity of the battery pack.

The first and second tension members may have the same or similar cross-sectional profile.

Using the same cross-sectional profile for both tension members simplifies manufacturing and assembly processes.

The first and second mounting portions may be wider than the first and second sidewalls.

Wider mounting portions provide increased surface area for secure attachment to the side rails, improving the overall stability of the battery pack.

The first and second tension members may be configured to be attached to the side rails of the battery pack using bolts.

Bolt attachment allows for easy assembly and disassembly of the battery pack, facilitating maintenance and potential battery array replacement.

The first and second tension members may each define a central portion shaped to accommodate connections of a battery array.

This design feature enables efficient integration of battery arrays within the pack structure.

The battery pack may further include a battery array.

Including a battery array at least partially completes the functional assembly of the battery pack.

The base may be a cold plate.

A cold plate base enhances thermal management capabilities of the battery pack, contributing to optimal battery performance and longevity.

In a second aspect, a vehicle comprising the battery pack of the first aspect is provided.

This integration of the battery pack into a vehicle demonstrates the practical application and versatility of the battery pack design.

### BRIEF DESCRIPTION OF FIGURES

Embodiments of the invention will be described, by way of example, with reference to the following drawings, in which:
FIGS. 1A-1B illustrate orthogonal views of a two-piece tension member for a battery pack, according to aspects of the present disclosure.
FIG. 2 illustrates an orthogonal view showing a central pathway of the two-piece tension member, according to aspects of the present disclosure.
FIG. 3 illustrates a side orthogonal view of a tension member, according to aspects of the present disclosure.
FIG. 4 illustrates a perspective view of a battery pack, according to aspects of the present disclosure.
FIG. 5 illustrates a top orthogonal view of a battery pack, according to aspects of the present disclosure.
FIG. 6 illustrates a side orthogonal view of a vehicle incorporating a battery pack, according to aspects of the present disclosure.

Common reference numerals are used throughout the figures to indicate similar features.

### DETAILED DESCRIPTION

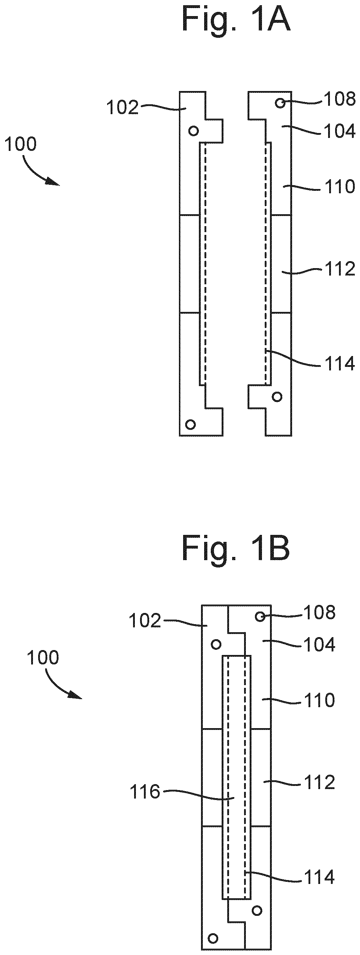

In an example, a two-piece tension member 100 for a battery pack is provided. As shown in Figs. 1A-1B, the two-piece tension member 100 comprises a first tension member 102 and a second tension member 104. The first tension member 102 and the second tension member 104 each include mounting portions 108 at their ends and a central portion 110 between the mounting portions 108.

The central portion 110 of the first tension member 102 defines a first recess on one side and has a first sidewall opposite the first recess. Similarly, the central portion 110 of the second tension member 104 defines a second recess on one side and has a second sidewall opposite the second recess. The first sidewall and the second sidewall each include apertures, shown as openings 112, along their length.

When the first tension member 102 and the second tension member 104 are positioned together, the first recess and the second recess are aligned to collectively define a central pathway 116. The central pathway 116 extends along the length of the two-piece tension member 100.

In some examples, the first tension member 102 and the second tension member 104 are made of aluminium. The first tension member 102 and the second tension member 104 may be formed by extrusion. In other examples, the first tension member 102 and the second tension member 104 are formed by high pressure die casting.

The mounting portions 108 of the first tension member 102 and the second tension member 104 are complementary. When the first tension member 102 and the second tension member 104 are positioned together, the mounting portions 108 fit together. The mounting portions 108 are wider than the sidewalls of the central portions 110.

In some examples, the two-piece tension member 100 can be made of a composite material. In other examples, the two-piece tension member 100 can be made of steel. The two-piece tension member 100 can also be manufactured using 3D printing in some examples.

A mica sheet 114 may be provided along the length of the central portions 110 of both the first tension member 102 and the second tension member 104. The mica sheet 114 may line the inner surfaces of the central portions 110 facing the central pathway 116.

In an example, the two-piece tension member 100 is part of a battery pack. The battery pack may comprise two side rails, a base, the first tension member 102, and the second tension member 104. The first tension member 102 and the second tension member 104 may be positioned between and perpendicular to the two side rails.

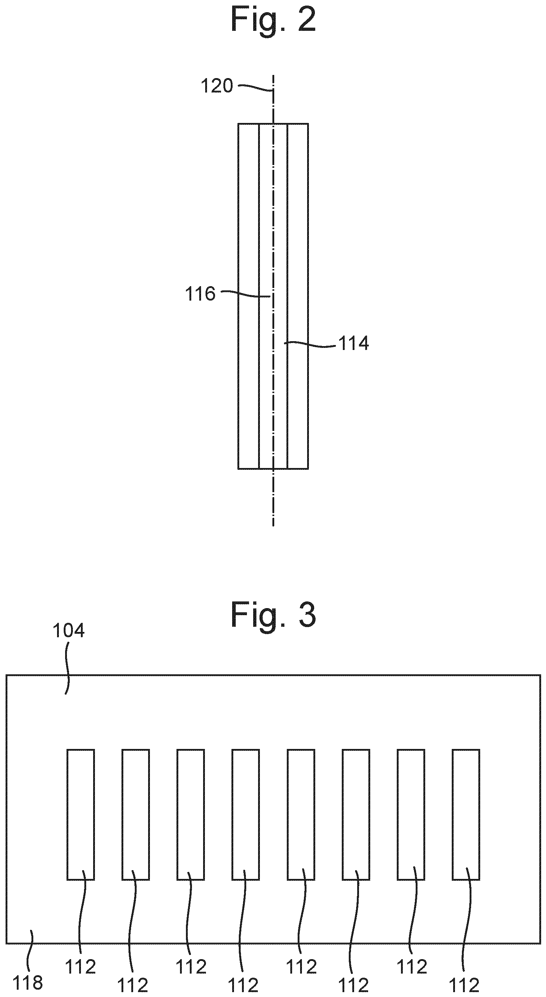

FIG. 2 illustrates an orthogonal view of the central pathway 116 created between the first tension member 102 and the second tension member 104 of the two-piece tension member 100. The central pathway 116 extends along the length of the two-piece tension member 100.

A mica sheet 114 is provided within the central pathway 116. The mica sheet 114 may extend the entire length of the central pathway 116.

The mica sheet 114 may provide benefits for thermal management and performance of the battery pack. For instance, the mica sheet 114 may act as a thermal barrier, helping to regulate temperature distribution within the battery pack. Additionally, in the event of a battery malfunction or overheating, gas may burst through the mica sheet 114 and escape the battery pack if necessary, providing a safety mechanism.

In some examples, each of the first and second sidewalls of the first tension member 102 and the second tension member 104 include, in respective first and second recesses, a silicate sheet along their length. This configuration may enhance the thermal management and safety features of the two-piece tension member 100.

The central pathway 116 may include multiple parallel channels in some examples. This configuration can provide increased surface area for heat dissipation and improved gas flow paths.

A centre line 120 is shown in FIG. 2, illustrating a measurement reference point for the structure. The centre line 120 extends horizontally from the central axis of the two-piece tension member 100.

In some examples, the mica sheet 114 can be replaced with a ceramic sheet. The ceramic sheet may provide similar thermal management and safety benefits as the mica sheet 114.

The central portions 110 of the first tension member 102 and the second tension member 104 are configured to accommodate the mica sheet 114 or alternative materials such as the ceramic sheet. This configuration allows for flexibility in material selection based on specific thermal management and other requirements of the battery pack. In some examples, a central portion 110 of the first tension member 102 may be thicker than a central portion 110 of the second tension member 104. For example, the thickness of the central portion of the first tension member 102 may be defined by a first dimension between an outer surface of the first tension member 102 (e.g., when assembled to the second member 104) and an inner surface that defines a wall of the central pathway 116. The thickness of the central portion of the second tension member 104 may be defined by a corresponding second dimension. In some examples, the first dimension is different from the second dimension.

FIG. 3 illustrates a side orthogonal view of a second tension member 104, which may also represent a first tension member 102. The second tension member 104 includes a side wall of tension member 118 along its length. Multiple openings 112 are visible along the side wall of tension member 118, extending in a linear configuration. In the example shown, eight openings 112 are positioned in a parallel arrangement along a horizontal plane. Each opening 112 is depicted as a rectangular element of uniform size and shape. However, the openings 112 may take any suitable shape, and there may be more or fewer than eight openings 112.

The openings 112 in the side wall of tension member 118 serve multiple purposes within the battery pack. These openings 112 allow for fluid communication between the central pathway 116 and the surrounding environment of the battery pack. This fluid communication facilitates thermal management by enabling gas or coolant flow through the two-piece tension member 100, which can help regulate the temperature of the battery arrays within the battery pack.

Additionally, the openings 112 may provide access points for electrical connections or sensors to be integrated into the battery pack. The central portion 110 of the second tension member 104 may be shaped to accommodate these connections or sensors, allowing for monitoring and control of the battery arrays.

The first tension member 102 and the second tension member 104 are configured to be attached to the side rails of the battery pack using bolts. The mounting portions of the tension members may include pre-drilled holes or threaded inserts to facilitate this attachment method. This bolted connection ensures a secure and rigid assembly of the battery pack structure.

The central portion 110 of both the first tension member 102 and the second tension member 104 is shaped to accommodate connections of a battery array. This design feature allows for efficient integration of the battery arrays within the battery pack, optimizing space utilization and ensuring proper electrical connections.

The mica sheet 114, which may be present at least partially along the length of the central pathway 116, can work in conjunction with the openings 112 to enhance the thermal management and safety features of the battery pack. The mica sheet 114 may act as a thermal barrier, while the openings 112 allow for controlled gas or fluid flow if necessary.

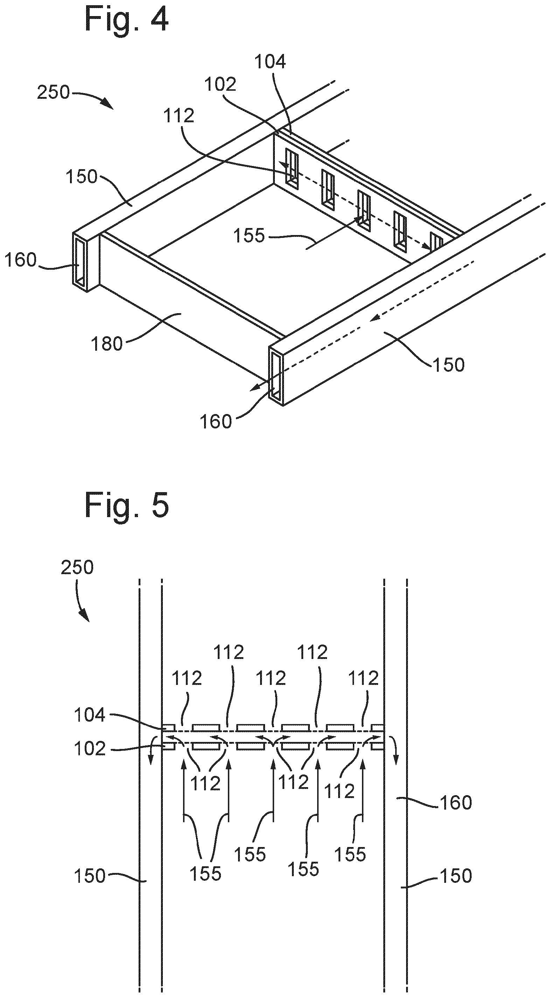

FIG. 4 illustrates a perspective view of a battery pack 250. The battery pack 250 comprises two side rails 150, a first tension member 102, a second tension member 104, and an end wall 180. The first tension member 102 and the second tension member 104 are positioned between and perpendicular to the two side rails 150. The two side rails 150 are hollow along their length, with each side rail 150 including a hollow portion 160.

The first tension member 102 and the second tension member 104 are arranged such that the central pathway 116 formed between them is in fluid communication with the hollow portions 160 of the side rails 150. Each side rail 150 includes an opening on an inner side thereof which is aligned with the first recess of the first tension member 102. This opening on each side rail 150 is in fluid communication with the central pathway 116.

The end wall 180 forms the bottom surface of the battery pack 250, connecting with the side rails 150 and the first tension member 102 and the second tension member 104. In some examples, the end wall 180 may include ventilation ports to facilitate air flow within the battery pack 250.

The internal space of the battery pack 250 is configured to accommodate at least one battery array. The side rails 150, the first tension member 102, the second tension member 104, and a base are arranged to provide a structure suitable for housing and supporting the battery array.

A fluid flow path 155 is shown in FIG. 4, demonstrating how fluid or gas within the battery pack 250 may be vented from inside the battery pack 250 to atmosphere. The fluid flow path 155 may utilize the openings 112 in the first tension member 102 and the second tension member 104, the central pathway 116, and the hollow portions 160 of the side rails 150 to allow for efficient venting.

In some examples, the opening in each side rail 150 may be rectangular in shape, though other shapes may be used. The hollow portion 160 of each side rail 150 may be filled with a thermally conductive material to enhance heat dissipation from the battery pack 250.

The base of the battery pack 250 may be a cold plate, which can serve as part of a thermal management system for the battery pack 250. The cold plate may help regulate the temperature of the battery array within the battery pack 250.

In some examples, the side rails 150 may include internal baffles within the hollow portions 160. These internal baffles can help direct fluid flow and enhance the structural integrity of the side rails 150.

The battery pack 250 may include a thermal management system that utilizes the fluid flow path 155, the cold plate base, and potentially other components to regulate the temperature of the battery array within the battery pack 250.

FIG. 5 illustrates a top orthogonal view of a battery pack 250. The battery pack 250 includes two parallel side rails 150 positioned along the lateral edges of the assembly. Between the side rails 150, a first tension member 102 and a second tension member 104 are arranged to give rise to the central pathway 116.

The first tension member 102 and the second tension member 104 are positioned perpendicular to the side rails 150. The first tension member 102 and the second tension member 104 include openings 112 arranged at regular intervals along their length. The openings 112 are in fluid communication with the central pathway 116.

Each side rail 150 includes a hollow portion 160 along its length. The hollow portion 160 is in fluid communication with the central pathway 116. This arrangement allows for fluid or gas flow between the side rails 150 and the central pathway 116.

Fluid flow paths 155 are shown in FIG. 5. The fluid flow paths 155 may provide a fluid or gas flow path out of the battery pack 250. The fluid flow paths 155 may utilize the openings 112 in the first tension member 102 and the second tension member 104, the central pathway 116, and the hollow portions 160 of the side rails 150 to allow for efficient fluid or gas movement within the battery pack 250.

In some examples, the fluid flow path 155 can include a heat exchanger. The heat exchanger may be positioned within the hollow portion 160 of a side rail 150 or along the central pathway 116. The heat exchanger can facilitate temperature regulation within the battery pack 250 by allowing heat transfer between the fluid or gas flowing through the fluid flow path 155 and the surrounding components of the battery pack 250.

The arrangement of the first tension member 102, the second tension member 104, and the side rails 150, along with the fluid communication between these components, contributes to the overall functionality of the battery pack 250. This configuration may allow for efficient thermal management, pressure regulation, and potentially the venting of gases in case of a battery malfunction.

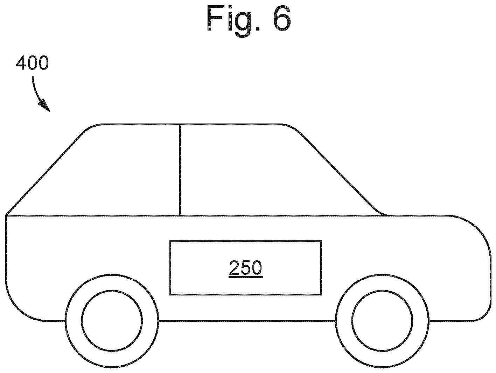

FIG. 6 illustrates a side view outline of a vehicle 400. The vehicle 400 may be a hybrid car or an electric car. In the body of the vehicle 400, there is a battery pack 250.

The battery pack 250 is incorporated into the vehicle 400 structure. The positioning of the battery pack 250 within the vehicle 400 may provide benefits for vehicle design and performance. For example, the central location of the battery pack 250 may contribute to a lower center of gravity for the vehicle 400, potentially improving handling and stability.

The integration of the battery pack 250 into the vehicle 400 may utilize the structural features of the battery pack 250, such as the two-piece tension member 100, the first tension member 102, the second tension member 104, and the side rails 150. These components may contribute to the overall rigidity and strength of the vehicle 400 structure.

The integration of the battery module, which contains the tension member 100, into the vehicle 400 demonstrates the practical application of the tension member design in automotive applications. The vehicle 400 utilizes the battery pack 250, which includes the array plates 150, side rails 155, and the tension member 100, as its power source.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A battery pack comprising two side rails, a base, a first tension member, and a second tension member, wherein:
the two side rails are hollow along their length;
the first tension member includes first mounting portions and a first central portion between the first mounting portions, the first central portion defining a first recess on one side of the first tension member and having a first sidewall opposite the first recess which includes first apertures therealong;
the second tension member includes second mounting portions and a second central portion between the second mounting portions, the second central portion defining a second recess on one side of the second tension member and having a second sidewall opposite the second recess which includes second apertures therealong;
the first and second tension members are positioned such that the first and second recess are aligned and collectively define a central pathway, and are positioned between and perpendicular to the two side rails such that, in combination with the base, the side rails, first and second tension members, and base are arranged so as to accommodate at least one battery array; and
each side rail includes an opening on an inner side thereof which is aligned with the first recess of the first tension member, the opening on each side rail being in fluid communication with the central pathway.

2. The battery pack of claim 1, wherein the central pathway includes a silicate sheet along its length.

3. The battery pack of claim 1 wherein each of the first and second sidewalls of the first and second tension members include, in respective first and second recesses, a silicate sheet along their length.

4. The battery pack of claim 2 or claim 3, wherein the silicate sheet is a mica sheet.

5. The battery pack of any preceding claim, wherein the first and second tension members are made of aluminium.

6. The battery pack of any preceding claim, wherein the first and second tension members are formed by extrusion.

7. The battery pack of any one of claims 1-5, wherein the first and second tension members are formed by high pressure die casting.

8. The battery pack of any preceding claim, wherein the first and second mounting portions are complementary, such that when the first and second tension members are positioned together, the first and second mounting portions fit together.

9. The battery pack of any preceding claim, wherein the first and second tension members have the same cross-sectional profile.

10. The battery pack of any preceding claim, wherein the first and second mounting portions are wider than the first and second sidewalls.

11. The battery pack of any preceding claim, wherein the first and second tension members are configured to be attached to the side rails of the battery pack using bolts.

12. The battery pack of any preceding claim, wherein the first and second tension members each define a central portion shaped to accommodate connections of a battery array.

13. The battery pack of any preceding claim, further including a battery array.

14. The battery pack of any preceding claim, wherein the base is a cold plate.

15. A vehicle comprising the battery pack of any preceding claim.
